Europäisches Patentamt

European Patent Office

Office européen des brevets

(11) Publication number: **0 016 622**
**A1**

(12) **EUROPEAN PATENT APPLICATION**

(21) Application number: **80300795.4**

(22) Date of filing: 14.03.80

(51) Int. Cl.³: **G 01 T 3/00**
**H 01 J 47/02**

(30) Priority: 14.03.79 US 20598

(43) Date of publication of application:
01.10.80 Bulletin 80/20

(84) Designated Contracting States:
BE CH DE FR GB IT SE

(71) Applicant: WESTINGHOUSE ELECTRIC CORPORATION
Westinghouse Building Gateway Center
Pittsburgh Pennsylvania 15222(US)

(72) Inventor: Goldstein, Norman Phillip
4986 Longview Drive
Murrysville, Pennsylvania(US)

(74) Representative: van Berlyn, Ronald Gilbert et al,
23, Centre Heights
London, NW3 6JG(GB)

(54) Wide range radiation monitoring apparatus.

(57) This invention relates to a simple and rugged, wide-range radiation monitor adapted for use at various locations around a nuclear reactor plant.

An emitter plate (E) of a high atomic number material is positioned between collector plates (C1, C2) of a low atomic number material and the ionization current developed in the gap regions therebetween in response to low radiation fields and the self-powered current developed in response to high radiation fields is measured by a current measuring circuit (M) as an indication of impinging radiation. The spacing between the collector and emitter plates and accordingly the gas volume defined therebetween is great enough that the ionization current dominates the self-powered current at low radiation fields.

./...

FIG. 1

1

WIDE RANGE RADIATION MONITORING APPARATUS

This invention relates to an improved radiation monitoring apparatus having a wide range response.

In order to meet the safety regulations imposed on facilities associated with the storage, use or disposition of radioactive materials used in nuclear reactors, or the monitoring of an accident situation, there is a critical requirement for a radiation monitoring apparatus which is both rugged and reliable, and capable of indicating fields from 1 R/hr up to $10^8$ R/hr and continue to operate even if exposed to high radiation doses and/or temperatures of up to approximately 250°C.

Such an apparatus would find wide-spread use for monitoring radiation fields present at various locations around a nuclear power plant as well as monitoring radiation fields in stored fuel areas, high-level waste areas, as well as monitoring the activity in the primary coolant of a nuclear reactor.

It is an object of this invention to provide an improved radiation monitoring apparatus with a view to overcoming the deficiencies of the prior art.

The invention resides in a wide range radiation detector apparatus comprising a first collector element and a second collector element being spaced apart, an emitter element positioned between said first and second collector elements, said collector elements being constructed of a material which is different from the material of said emitter element, said materials being of different work functions and different atomic numbers, the work functions of said dissimilar materials producing a contact potential between said collector elements and said emitter element and resulting in an ionization current, the difference in the atomic number of the materials of said collector elements and said emitter element causing higher energy electrons to be ejected from the higher atomic number material than the lower atomic number material and resulting in a self-powered current, and current measuring means being operatively connected to said collector elements and said emitter element to provide a measurement of incident radiation, characterized in that the spacing between said collector elements and said emitter element and accordingly the gas volume defined therebetween is great enough that the ionization current dominates the self-powered current at low radiation fields.

In accordance with a preferred embodiment of the invention, there is provided a simple and rugged detector capable of measuring radiation fields over the range of 0.02 R/hr up to $10^8$ R/hr or higher. It is basically a combination of an ionization device and self-powered device which does not require an external power supply. The detector consists of an emitter element of high atomic number material which is connected to the center conductor of a signal cable. This emitter element is positioned in a spaced apart relationship between collector elements of a low atomic number material with a gap region between the emitter element and the adjacent collector elements.

The presence of a radiation field of gamma rays ejects electrons from both the emitter and collector elements which produce ionization in the gap regions. In low radiation fields the device functions in an ionization mode and the ion pairs produced in the gap regions are collected by the contact potential between the different metals making up the emitter and collector elements. In high radiation fields the ion collection is much less efficient and the current produced directly by the electrons ejected from the elements dominates so the device functions as a self-powered current device. The disclosed apparatus is extremely simple in construction and is both rugged and reliable. The apparatus is capable of withstanding high radiation doses and operating temperatures up to 250°C without a significant deterioration in performance.

The novel radiation monitoring apparatus disclosed herein is particularly suitable for use as an accident monitoring device for nuclear reactor facilities and also for use in monitoring high field locations such as fuel storage locations, high level waste storage areas, as well as other applications associated with breeder reactor facilities. The inventive concept can be employed as an in-core detector wherein the emitter element is a wire coaxially disposed within a tubular collector element.

The novel radiation monitoring detector operates as a self-powered device, i.e., without any external power supply, thus resulting in an extremely simple system consisting only of the detector itself, a signal cable and a current measuring device. In addition, the voltages involved are extremely small with only about 0.5 V across the detector and no voltage at all across the signal cable. The simplicity of the system results in high reliability while the low voltages involved mean that the detector and/or signal cable can be subjected to substantial radiation damage and ambient temperatures up to 250°C before a noticeable degradation in detector performance occurs.

A competing conventional system would require the use of a conventional ionization chamber system. Such a system would require a miniature ionization chamber, a cable for both the high voltage and signal, a high voltage power supply and a current measuring device. In order for the ionization chamber to function properly, it would require that a considerable fraction of the charge liberated by the radiation field be collected, even at the highest range. This requires that the chamber be small

4

and that the applied voltage be relatively high, i.e. 200-300 V. The required small size means that at low fields the sensitivity will be considerably lower than that of the disclosed detector. The high applied voltage required for the ionization chamber in the conventional system means that triaxial signal cable and guard rings in the chamber itself are required, making the system considerably more expensive than the disclosed detector. Finally the additional requirement of the power supply and the applied high voltage makes the conventional ionization chamber considerably less reliable. The extra reliability possessed by the disclosed detector is important for these high radiation level applications since the high fields would make it extremely difficult to replace the detectors or signal cable once the system has been installed.

In summary, the novel detector described herein is superior to a conventional ionization chamber system because of its wider operating range, its higher sensitivity at low fields, its simplicity and superior reliability.

The invention will become more readily apparent from the following exemplary description in connection with the accompanying drawings:

Figure 1 is a sectioned schematic illustration of a wide range radiation monitoring device employing the inventive features;

Figure 2 is a graphical illustration of the operation of the apparatus of Figure 1; and

Figure 3 is a sectioned illustration of an alternate embodiment of the invention.

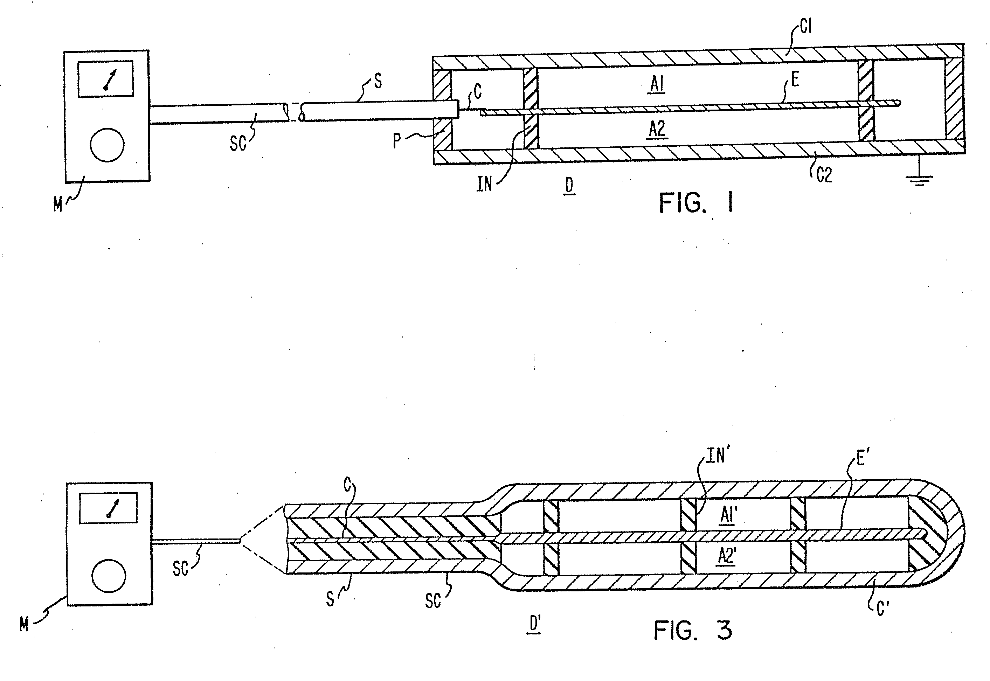

Referring to Figure 1, there is schematically illustrated a radiation detector D which is connected to a current measuring circuit M via a signal cable SC.

In the simplified embodiment of Figure 1 the detector D consists of a thin plate emitter element E positioned and supported between parallel collector plate elements C1 and C2 by electrical insulators IN. The emitter element E is a high Z material such as W, Ta, Pt, Au, Pb, etc., while the collector elements Cl and C2, which are thicker than the emitter E, consist of a low Z material such as Al, Ni, Fe, etc. End plates P, which extend between the collectors Cl and C2 and are typically made of the same material as collectors Cl and C2, form an enclosed volume V and provide electrostatic shielding and mechanical rigidity. The insulators IN which extend between the collectors Cl and C2 and support the emitter E in a spaced-apart relationship from the collectors Cl and C2, are typically constructed from $Al_2O_3$ or MgO. The signal cable SC consists of an inner electrical conductor C and an outer shield S. The inner conductor C is connected to the emitter plate E while the collectors Cl and C2, which are grounded, are connected to the shield S via the end plates P.

The thickness of the emitter E will depend on the density of the material used. If the thickness is measured in terms of $gm/cm^2$, a suitable thickness range is about 0.1 to 1.0 $gm/cm^2$. This corresponds to a thickness of between about 0.002 inch and 0.020 inch for platinum. If it is anticipated that predominantly high energy gamma rays are being detected, i.e., above 4 Mev, then the thickness of the emitter E could be between 2 and 3 $gm/cm^2$.

The thickness of the collectors Cl and C2 is typically about 1/8 inch to 1/4 inch to provide the necessary mechanical rigidity. The collectors Cl and C2 should be made of the same material in order to provide a symmetrical response. Furthermore, the emitter E should be positioned at an equal distance from the inside surface of collectors Cl and C2 to assure the desired operational symmetry. Thus, the gap regions Al and A2 would be the same. While this is a preferred configuration, the detector D would work if the emitter E was not positioned equally distant from the collectors Cl and C2. The latter situation may be appropriate when a minimum thickness detector D is required.

The spacing between the emitter plate E and the

6

collector plates C1 and C2, defined as gap regions A1 and A2, will vary depending on the detector application but that spacing and accordingly the gas volume defined between the emitter and collector plates should be large enough to provide an ionization current which is significantly greater than the self-powered current at low radiation fields. Typically, the spacing would be between approximately 1/16 inch and 1/2 inch.

The end plates P provide the desired electrostatic shielding for the detector D by completely enclosing the emitter E.

Gamma radiation G impinging on the outside surface of the collector C1 will cause electrons to be released by the collector C1 and transmitted to the adjacent surface of the emitter E.

At the same time most of the incident gamma rays pass through the collector C1 without interacting and reach the emitter E. This flux of gamma rays results in the ejection of electrons from the emitter E by means of photoelectric and compton interactions to the lower collector C2.

The electrons traveling between the plates of the detector D produce ion pairs within the gap regions A1 and A2. In a conventional ionization chamber, a voltage would be applied to collect this separated charge. In the disclosed embodiment however, use is made of the contact potential difference between the emitter E and the collectors C1 and C2 to provide this collecting voltage. This contact potential arises spontaneously due to the different work functions of the metals used for the emitter E and the collectors C1 and C2 and thus the detector D does not require any external power supply. Thus, one of the current producing mechanisms in the device D involves the collection of the ion pairs produced in the gap regions A1 and A2 by electrons emitted by the collectors and the emitter. The voltage required to collect the resulting charge arises from the contact potential difference between the elements of dissimilar materials.

The volume V and the gap regions A1 and A2 are filled with a gas, such as air, that has a relatively low recombination coefficient. The recombination coefficient is a measure of how easily electrons recombine with the positive ions created by their liberation.

If the inner conductor C and the shield S of the signal cable SC are made of the same material, then no voltage will result across the cable SC and thus it is possible to have a voltage across the elements of the detector D without having a voltage on the signal cable SC. The significance of this will become apparent from the following discussion.

The second current producing mechanism involves a true self-powered current. The number of electrons released from the emitter E in response to impinging gamma radiation G will be higher than the electrons released by the collectors C1 and C2 because the higher Z material of the emitter E will result in a higher number of interactions and produce higher energy electrons than that produced by the lower Z material of the collectors.

Thus the difference in work functions of the emitter and collector materials assures the necessary contact potential for producing the ionization current which dominates a low radiation levels, while the difference in the atomic number of the materials produces the self-powered current which dominates at high radiation levels.

The current measuring device M basically indicates the net flow of electrons into or out of the emitter E. For the self-powered current this consists of two components, electrons from the collector elements C1 and C2 flowing into the emitter element E and those ejected from the emitter plate. As stated, the material of the emitter plate E is selected so that the current of electrons ejected from the emitter plate E is larger than that from C1.

The existence of the above-described current producing mechanisms enable the device D to function

8

effectively over a much wider useful range of radiation than is available from conventional devices. This increased range is due to the fact that at very low radiation fields, the contact potential, which is quite small, i.e. 0.5 V, is capable of collecting a large fraction of the ion pairs produced in the gap regions A1 and A2. This current can be as much as 250 times higher than the self-powered current and thus at low fields, detector D is 250 times more sensitive than a device using only the self-powered mechanism.

Extensive experimentation has been conducted using a tantalum plate of 0.010 inch thickness as the emitter element E and aluminum plates of 0.25 inch thickness for the collector elements C1 and C2. The tantalum emitter E was 4" x 4" in size and the measured contact potential was approximately 0.6 volts. Measurements performed in a 60 Co field showed that fields of less than 1 R/hr could easily be measured using a Kiethley 600A Electrometer as the current measuring circuit M. The background current was about $4 \times 10^{-14}$ Amps and a field of 0.1 R/hr produced a current of about $5 \times 10^{-13}$A, while a 1 R/hr produced a current of approximately $4 \times 10^{-12}$A, both of which were easily measurable. The corresponding self-powered currents were $2 \times 10^{-15}$A and $2 \times 10^{-14}$A, respectively. These results indicate that in actual practice, fields as low as approximately 0.1 R/hr could be measured with no difficulty using the radiation monitor configuration of the detector D of Figure 1. It was further determined that higher currents could be realized by using larger collector and emitter plate elements since there are no practical restraints on the size of the detector D. For instance, a detector D utilizing 12" x 12" collector and emitter plate elements would produce a current which is equal to 144/16, or 9, times higher than the 4" x 4" detector utilized to produce the above measurements.

In higher fields, the small value of the contact potential results in a competition between the ion pair recombination process and the charge collection process and a smaller and smaller fraction of the liberated charge is actually collected. In this region of operation, experimental analysis indicates that the current continues to increase monotonically but approximately as the square root of the strength of the radiation field. (Reference "Direct Conversion of Nuclear Radiation Energy", by George H. Miley, American Nuclear Society publication 1970.) The direct self-powered current, however, is unaffected by these considerations and changes linearly with the radiation field. Thus, at high fields, i.e., $>10^4$ R/hr, the current from the two described mechanisms become comparable and at still higher fields the self-powered current dominates, thus resulting in a linear response. The much lower sensitivity associated with the self-powered mechanism is no longer important in a high radiation field condition.

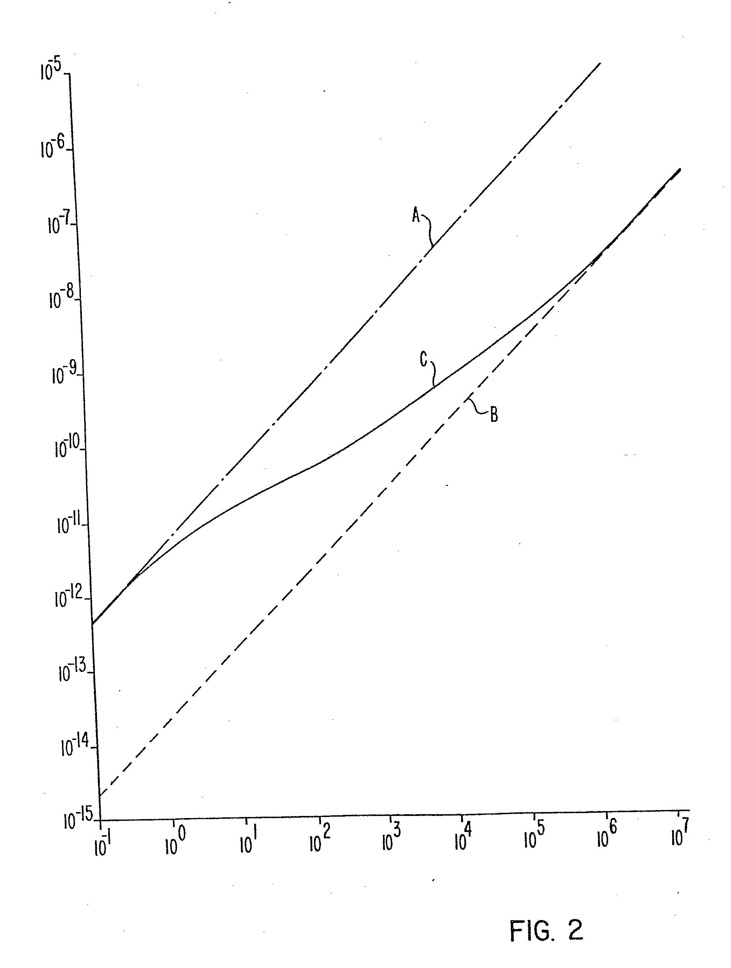

For example, at $10^6$ R/hr, the self-powered current is approximately $2 \times 10^{-8}$ amperes which represents no measurement problem. The overall response function over a radiation range from $10^{-1}$ to $10^7$ R/hr is graphically illustrated in Figure 2. A plot of detector current versus radiation field for the detector D is plotted as curve C against an ionization chamber response curve A and a self-powered response curve B. It is seen from Figure 2 that the response of the detector D moves from the high sensitivity ionization chamber response curve A to the lower sensitivity self-powered response curve B as the radiation field increases. At low radiation fields, the response of the detector D is entirely the result of ionization, while at high radiation fields, the response of the detector D is almost entirely from the self-powered current. Therefore, the detector configuration of Figure 1 is capable of detecting radiation fields over a wide range because of its high sensitivity at low radiation fields and lower sensitivity at high radiation fields.

Thus, the radiation detector D operates without any external power supply thus making the detector D an extremely simple apparatus consisting only of the detector

10

D, signal cable SC, and the current measuring circuit M. Furthermore, the voltages involved are extremely small with only about 0.5 volts across the detector elements and no voltage across the signal cable SC. The simplicity of the detector D results in high reliability and the low voltages involved means the detector D and/or signal cable SC can be subjected to significant radiation exposure as well as ambient temperatures of up to approximately 250°C without a noticeable degradation in the performance of the detector D.

While the response of detector D is non-linear over the wide radiation range, the detector D does provide linear response at the low radiation fields and at the very high radiation fields. The linear response at the high radiation fields is most important in that it will be in this range that the most important radiation measurements will be made in practical applications. Compensation for the non-linear response in the middle radiation levels can be accommodated in the measuring circuit M.

While the above discussion has been directed to the parallel plate detector configuration of Figure 1, the inventive concept can be embodied in a tubular configuration D' as illustrated in Figure 3. The collector plates C1 and C2 of Figure 1 are replaced with a single tubular collector element C' within which is positioned an emitter wire or rod element E' so as to define the gap regions A1' and A2'. The measuring circuit M is connected to the detector D' by the signal cable SC wherein the shield S is connected to the tubular collector element C' and the conductor C is connected to the emitter element E'.

The coaxial arrangement of emitter element E' within the tubular collector C' in combination with the signal cable SC constitutes an in core gamma sensitive self-powered detector which is far superior to conventional in core detectors.

A typical implementation of the detector D' of Figure 3 consists of a platinum emitter element E', an Inconel collector element C' and ceramic insulators IN'

11

comprised of $Al_2O_3$ or MgO supporting the emitter element E' within the collector element C'. Although the emitter elment E' is shown in Figure 3 as being solid, it may be of tubular configuration. As described above, impinging gamma radiation results in electrons being ejected from the emitter E' and the collector C' by means of photoelectron and compton interactions. The ion pairs produced in the gap regions A1' and A2' by the electrons crossing the gap regions A1' and A2' are collected without requiring an external power supply by making use of the contact potential difference between the emitter E' and collector C' as discussed above.

The advantage of the in core detector design of Figure 3 is that it provides a device D' which operates as a standard self-powered detector in the reactor power range while also providing measurement capabilities during start-up.

Further implementations of the above described inventive concepts include the construction of a low radiation detector and a separate high radiation detector.

A low radiation detector would include collector and emitter elements of different work functions to establish the contact potential required for generating the ionization current which is dominant at low radiation levels.

A high radiation detector would include collector and emitter elements wherein the atomic number of the emitter element is higher than the collector element to support a self-powered current at high radiation fields.

12

What we claim is:

1. A wide range radiation detector apparatus comprising a first collector element and a second collector element being spaced apart, an emitter element positioned between said first and second collector elements, said collector elements being constructed of a material which is different from the material of said emitter element, said materials being of different work functions and different atomic numbers, the work functions of said dissimilar materials producing a contact potential between said collector elements and said emitter element and resulting in an ionization current, the difference in the atomic number of the materials of said collector elements and said emitter element causing higher energy electrons to be ejected from the higher atomic number material than the lower atomic number material and resulting in a self-powered current, and current measuring means being operatively connected to said collector elements and said emitter element to provide a measurement of incident radiation, characterized in that the spacing between said collector elements and said emitter element and accordingly the gas volume defined therebetween is great enough that the ionization current dominates the self-powered current at low radiation fields.

2. A wide range radiation detector apparatus as claimed in claim 1 wherein said collector elements and emitter element are parallel plates.

3. A wide range radiation detector apparatus as claimed in claim 1 or 2 wherein the peripheral edges of said collector plate elements extend beyond the peripheral edge of said emitter plate element, and further including an electrostatic shielding enclosure means extending between said collector elements to enclose said emitter element.

4. A wide range radiation detector apparatus as claimed in claim 1, 2 or 3 wherein said first and second collector elements consist of opposite walls of a tubular collector means, said emitter element being a tubular emitter means positioned within said tubular collector means.

5. A wide range radiation detector apparatus as claimed in claim 1, 2, 3 or 4 further including a signal cable connecting said collector and emitter elements to said current measuring means, said cable consisting of an inner conductor and an outer shield of the same material, said inner conductor being connected to said emitter element and said outer shield being connected to said collector elements.

6. A wide range radiation detector apparatus as claimed in one of the preceding claims wherein the spacing between said collector elements and said emitter element is between approximately 1/16 inch and 1/2 inch.

7. A wide range radiation detector apparatus substantially as hereinbefore described with reference to, and as shown in, the accompanying drawings.

FIG. 1

FIG. 3

FIG. 2

## European Patent Office

## EUROPEAN SEARCH REPORT

Application number

EP 80 30 0795

| | DOCUMENTS CONSIDERED TO BE RELEVANT | | CLASSIFICATION OF THE APPLICATION (Int. Cl.) |
|---|---|---|---|
| Category | Citation of document with indication, where appropriate, of relevant passages | Relevant to claim | |
| A | US - A - 3 760 183 (J.P. NEISSEL)<br>* Abstract; figures 5,6 *<br><br>-- | 1,4 | G 01 T 3/00<br>H 01 J 47/02 |
| A | US - A - 3 879 612 (R.G. FOSTER et al.)<br>* Abstract; column 4, lines 25-29; figure 3 *<br><br>-- | 1,5 | |
| A | US - A - 2 696 564 (P.E. OHMART)<br>* Claim 8 *<br><br>-- | 1 | TECHNICAL FIELDS SEARCHED (Int.Cl. 3) |
| A | US - A - 3 511 994 (G.S. JONSSON)<br>* Figures 1,2 *<br><br>---- | 1,2,3 | G 01 T 3/00<br>H 01 J 47/02<br>47/12 |

CATEGORY OF
CITED DOCUMENTS

X: particularly relevant

A: technological background

O: non-written disclosure

P: intermediate document

T: theory or principle underlying
   the invention

E: conflicting application

D: document cited in the
   application

L: citation for other reasons

&: member of the same patent
   family,
   corresponding document

The present search report has been drawn up for all claims

| Place of search | Date of completion of the search | Examiner |
|---|---|---|
| The Hague | 27-05-1980 | ARMSPACH |

EPO Form 1503.1   06.78